# EUROPEAN PATENT SPECIFICATION

(11) **EP 4 199 643 B1**
(45) Date of publication and mention of the grant of the patent: **14.05.2025**
(21) Application number: 20949170.3
(22) Date of filing: 14.08.2020
(51) Int. Cl.: H04W 76/14, H04W 88/04

(54) **WIRELESS COMMUNICATION METHOD, AND TERMINAL**
DRAHTLOSKOMMUNIKATIONSVERFAHREN UND ENDGERÄT
PROCÉDÉ DE COMMUNICATION SANS FIL, ET TERMINAL

(43) Date of publication of application: 21.06.2023
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN)
(74) Representative: Taor, Simon Edward William
(86) International application number: PCT/CN2020/109330
(87) International publication number: WO 2022/032672

(56) References cited:
- WO-A1-2017/039735
- WO-A1-2017/132991
- CN-A- 106 162 929
- CN-A- 108 377 564
- CN-A- 110 098 858
- US-A1- 2019 387 498
- US-A1- 2020 068 380
- US-B2- 10 609 744
- HUAWEI ET AL: "Procedures for remote or relay UE in idle mode", vol. RAN WG2, no. Kaohsiung; 20161010 - 20161014, 9 October 2016 (2016-10-09), XP051151348, Retrieved from the Internet <URL:http://www.3gpp.org/ftp/Meetings_3GPP_SYNC/RAN2/Docs/> [retrieved on 20161009]

## Description

### TECHNICAL FIELD

The embodiments of the present disclosure relate to communication technology, and more particularly, to wireless communication methods, to a remote terminal and to a relay terminal.

### BACKGROUND

In the Release 13 (Rel-13) Proximity based Service (ProSe), the 3rd Generation Partnership Project (3GPP) introduced a terminal-to-network relay function based on Layer 3 relay. Specifically, a relay terminal with the Layer 3 relay function transfers data between a remote terminal and a network, and the remote terminal and the relay terminal are connected via a sidelink.

In Rel-15 Wearable Device (FeD2D), the 3GPP has studied a terminal-to-network relay function based on Layer 2 relay. Similar to the Rel-13 ProSe, a relay terminal with the Layer 2 relay function transfers data between a remote terminal and a network, and the remote terminal and the relay terminal are connected via a sidelink.

However, the current design of the relay terminal only involves combining the relay protocol layer with Layer 3 or Layer 2. Regarding the specific relay function or relay service of the relay protocol layer, that is, the specific operation mode of the relay terminal, there is no relevant technical solution, and the operation mode of the relay terminal is not designed, such that the resources of the relay terminal cannot be reasonably utilized, and the operation efficiency and processing capability of the relay terminal are reduced. CN110098858A discloses a relay working mode configuration method and terminal. The document by HUAWEI "Procedures for remote or relay UE in dle mode", publication date 09.10.2016, R2-166914, XP51151348A discloses procedures for remote or relay UE in idle mode. WO2017039735A1 discloses user equipment, and evolved node BS supporting layer-2 relaying and route switching.

### SUMMARY

The invention is defined by the appended claims. A wireless communication Wireless communication methods, a remote terminal and a relay terminal as set out in the appended claims are provided, capable of not only enabling a remote terminal to access a network via a relay terminal, but also improving the operation efficiency and processing capability of the relay terminal without wasting resources of the relay terminal.

In a first aspect, a wireless communication method performed by a remote terminal is provided. The method includes: transmitting, by the remote terminal to a relay terminal, a first message indicating that a relay service mode required by the remote terminal is a first service mode and/or a second service mode; and receiving, by the remote terminal from the relay terminal, a second message as a response to the first message. The first service mode includes a service mode requiring forwarding of uplink data. The second service mode includes a service mode only used for forwarding a first downlink message. The first downlink message includes a paging message. The second message is a first PC5-Radio Resource Control (RRC) message. The first PC5-RRC message includes a response message for responding to signaling for requesting a downlink message.

In a second aspect, a wireless communication method performed by a relay terminal is provided. The method includes: receiving, by the relay terminal from a remote terminal, a first message indicating that a relay service mode required by the remote terminal is a first service mode and/or a second service mode; determining, by the relay terminal based on the first message, whether a communication connection is successfully established or whether a downlink message is successfully received; and transmitting, by the relay terminal to the remote terminal, a second message as a response to the first message. The first service mode includes a service mode requiring forwarding of uplink data. The second service mode includes a service mode only used for forwarding a first downlink message. The first downlink message includes a paging message. The second message is a first PC5-Radio Resource Control (RRC) message. The first PC5-RRC message includes a response message for responding to signaling for requesting a downlink message.

In a third aspect, a remote terminal is provided. The terminal device includes a processor and a memory. The memory is configured to store a computer program, and the processor is configured to invoke and execute the computer program stored in the memory to perform the method according to the above first aspect or any implementation thereof.

In a fourth aspect, a relay terminal is provided. The relay terminal includes a processor and a memory. The memory is configured to store a computer program, and the processor is configured to invoke and execute the computer program stored in the memory to perform the method according to the above second aspect or any implementation thereof.

With the above technical solutions, based on the first message, a relay terminal is enabled to determine the relay service mode required by the remote terminal, such that the relay terminal can provide a relay service for the remote terminal based on the first service mode or the second service mode indicated in the first message and the remote terminal can access a network via the relay terminal. In addition, the service mode of the relay terminal can be managed according to the service requirements of the remote terminal, such that the operation efficiency and processing capability of the relay terminal can be improved without wasting the resources of the relay terminal.

### BRIEF DESCRIPTION OF DRAWINGS

FIG. 1 shows an example of an application scenario according to the present disclosure.
FIG. 2 is a schematic flowchart illustrating a wireless communication method according to an embodiment of the present disclosure.
FIG. 3 is a schematic block diagram of a remote terminal according to an embodiment of the present disclosure.
FIG. 4 is a schematic block diagram of a relay terminal according to an embodiment of the present disclosure.
FIG. 5 is a schematic block diagram of a communication device according to an embodiment of the present disclosure.
FIG. 6 is a schematic block diagram of a chip according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the claims.

It can be appreciated that the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Universal Mobile Telecommunication System (UMTS), Wireless Local Area Networks (WLAN), Wireless Fidelity (WiFi), the next generation communication system, or other communication systems. The present disclosure can also be applied to Device to Device (D2D) communication, Machine to Machine (M2M) communication, and Machine Type Communication (MTC), Vehicle to Vehicle (V2V) communication, etc. Optionally, the communication system of an embodiment of the present disclosure may be applied to a Carrier Aggregation (CA) scenario, a Dual Connectivity (DC) scenario, a Standalone (SA) network deployment scenario, and the like.

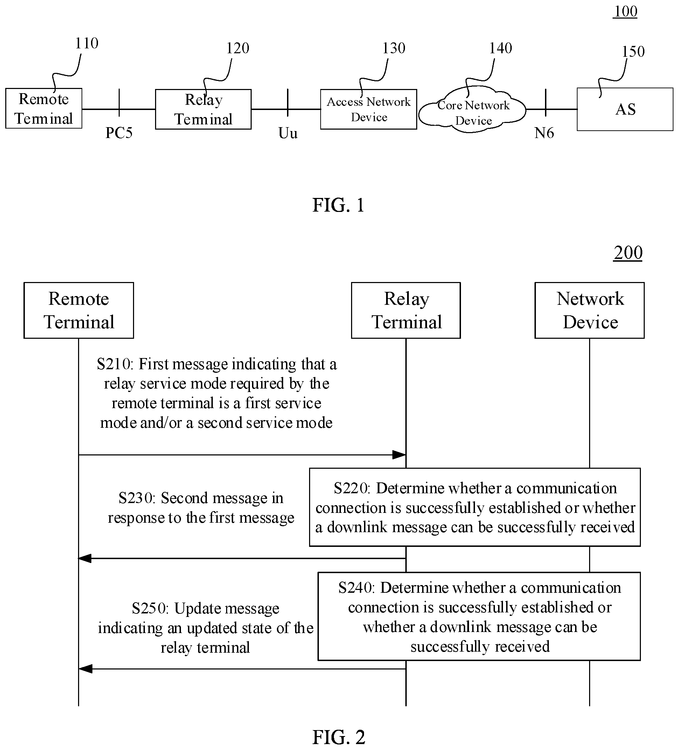

FIG. 1 shows an example of a system framework according to the present disclosure.

As shown in FIG. 1, the system framework 100 may include a remote terminal 110, a relay terminal 120, an access network device 130, a core network device 140, and an Application Server (AS) 150.

As an example, the remote terminal 110 and the relay terminal 120 may be terminal devices that have been authenticated via a network when in the coverage of the network. The remote terminal 110 may be a terminal device that is authenticated as being able to access the wireless network via a relay terminal. In other words, the remote terminal 110 may be authorized to serve as a remote User Equipment (Remote UE). The relay terminal 120 may be a terminal device authenticated being able to serve as a relay node. Both the remote terminal 110 and the relay terminal 120 may be authorized to transmit and receive relay discovery related messages, which may include a discovery message and a discovery request message.

Here, the remote terminal 110 and the relay terminal 120 may be any device or apparatus configured with a physical layer and a media access control layer. The terminal device may also be referred to as an access terminal, e.g., User Equipment (UE), subscriber unit, subscriber station, mobile, mobile station, remote station, remote terminal, mobile device, user terminal, terminal, wireless communication device, user agent, or user device. The access terminal may be a cellular phone, a cordless phone, a Session Initiation Protocol (SIP) phone, a Wireless Local Loop (WLL) station, a Personal Digital Assistant (PDA), a wireless communication-enabled handheld device or computing device, or any other linear processing device connected to a wireless modem, a vehicle mounted device, a wearable device, etc. The embodiments of the present disclosure will be described by taking a vehicle mounted terminal as an example, but is not limited thereto.

In some embodiments of the present disclosure, the remote terminal 110 may support an end-to-end protocol stack, which may include a Packet Data Convergence Protocol (PDCP) layer of a 3GPP PC5 interface and upper protocol layers above the PDCP layer, including user plane protocol layers and control plane protocol layers. The user plane protocol layers include, but not limited to, a Service Data Adaptation Protocol (SDAP) layer and an Internet Protocol (IP) layer, and the control plane protocol layers include, but not limited to, a Radio Resource Control (RRC) layer and a Non-Access Stratum (NAS).

In some embodiments of the present disclosure, the remote terminal 110 and the relay terminal 120 may support a point-to-point protocol stack, which may include Layer 2 (L2) and Layer 1 (L1) of the 3GPP PC5 interface. The L1 and L2 protocol stack includes, but not limited to, a Radio Link Control (RLC) layer, a Media Access Control (MAC) layer and a physical (PHY) layer.

In addition, the relay terminal 120 may be provided with a relay protocol layer. The functions of the relay protocol layer can be used to transmit data packets and related control information between remote terminals via the relay terminal.

For example, the relay protocol layer may be a terminal-to-network relay function based on Layer 3 relay, and Layer 3 is used to transfer control messages, including e.g., the Internet Protocol (IP) layer, the Radio Resource Control (RRC) layer, and the Non-Access Stratum (NAS). That is, a remote terminal accesses a network via a relay terminal with the Layer 3 relay function. For example, the relay terminal has the function of IP layer relay. Specifically, the relay terminal with the Layer 3 relay function can transmit data between the remote terminal and the network, and the remote terminal and the relay terminal can be connected via a sidelink.

In another example, the relay protocol layer may be a terminal-to-network relay function based on Layer 3 relay, and Layer 2 is used to provide correct transmission and reception of signaling messages, including partial duplication detection. For example, Layer 2 may include Media Access Control (MAC), Radio Link Control (RLC) and Physical (PHY) layers. That is, a remote terminal accesses a network via a relay terminal with the Layer 2 relay function. The relay terminal has the functions of the Access Stratum (AS) and the layers below the RLC layer. Similar to Rel-13 ProSe, the relay terminal with the Layer 2 relay function can transfer data between the remote terminal and the network, and the remote terminal and the relay terminal can be connected via a sidelink.

In the framework 100, the remote terminal (Remote UE) 110 can access the network device 130 via the relay terminal 120. Specifically, the remote terminal 110 and the relay terminal 120 may be connected or communicated via a PC5 interface of the 3GPP system. The end-to-end connection or communication between the relay terminal 120 and the network device 130 may also be performed via a Uu interface of the 3GPP system.

In some embodiments of the present disclosure, the remote terminal 110 or the relay terminal 120 may be referred to as a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In some embodiments of the present disclosure, the remote terminal 110 or the relay terminal 120 may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In some embodiments of the present disclosure, the access network device may be a base station such as Evolutional Node (eNB or eNodeB) in an LTE system, a Next Generation Radio Access Network (NG RAN) device, a base station such as gNB in the NR system, or a radio controller in a Cloud Radio Access Network (CRAN), or the network device 120 may be a relay station, an access point, a vehicle-mounted device, a wearable device, a hub, a switch, a bridge, a router or a network device in a future evolved Public Land Mobile Network (PLMN).

In some embodiments of the present disclosure, the core network device 140 may be a 5G Core (5GC) device, for example, Access and Mobility Management Function (AMF), Authentication Server Function (AUSF), User Plane Function (UPF), or Session Management Function (SMF). Optionally, the core network device 130 may alternatively be an Evolved Packet Core (EPC) device of the LTE network, for example, a Session Management Function + Core Packet Gateway (SMF+PGW-C) device. It can be appreciated that the SMF+PGW-C can implement the functions of both SMF and PGW-C. With the network evolution, the above core network device may have other names, or a new network entity may be formed due to division of the functions of the core network, and the embodiment of the present disclosure is not limited to any of these examples.

As an example, assuming that the access network device 130 is an NG RAN device and the core network device 140 is a 5GC device, the remote terminal 110 can be connected to the relay terminal 120 via the PC5 interface, and the relay terminal 120 can be connected to the access network device 130 via the Uu interface, thereby being connected to the core network device 140, which is connected to the AS 150 via an N6 interface.

Of course, the framework 100 may also be applicable to other 3GPP communication systems, such as the 4G communication system, or a future 3GPP communication system, and the present disclosure is not limited to this. In addition, in an embodiment of the present disclosure, the Application Server (AS) in FIG. 1 may also be another terminal device or an external public safety internet.

It can be appreciated that, in the embodiments of the present disclosure, a device having a communication function in a network/system may be referred to as a communication device. Taking the communication system 100 shown in FIG. 1 as an example, the communication devices may include the network device 120 and the terminal devices 110 with communication functions. The network device 120 and the terminal devices 110 may be the devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

In an embodiment of the present disclosure, based on a relay service mode required by the remote terminal 110, a specific relay function or relay service for the relay protocol layer of the relay terminal 120, i.e., the specific operation of the relay terminal, is designed. Accordingly, the operation efficiency and processing capability of the relay terminal can be improved without wasting the resources of the relay terminal.

FIG. 2 is a schematic flowchart illustrating a wireless communication method 200 according to an embodiment of the present disclosure. The method 200 may be interactively executed by a remote terminal and a relay terminal. The remote terminal shown in FIG. 2 may be the remote terminal 110 shown in FIG. 1, and the relay terminal shown in FIG. 2 may be the relay terminal 120 shown in FIG. 1.

As shown in FIG. 2, the method 200 may include the following.

At S210, a remote terminal transmits to a relay terminal a first message indicating that a relay service mode required by the remote terminal is a first service mode and/or a second service mode.

With the first message, a relay terminal is enabled to determine the relay service mode required by the remote terminal, such that the relay terminal can provide a relay service for the remote terminal based on the first service mode or the second service mode indicated in the first message and the remote terminal can access a network via the relay terminal. In addition, the service mode of the relay terminal can be managed according to the service requirements of the remote terminal, such that the operation efficiency and processing capability of the relay terminal can be improved without wasting the resources of the relay terminal.

The first service mode and the second service mode will be described below.

In the embodiments of the present disclosure, the first service mode includes a service mode requiring forwarding of uplink data. For example, the first service mode may include a service mode requiring forwarding of uplink data and downlink data. In another example, the first service mode may include a service mode requiring forwarding of uplink data but not downlink data.

In some embodiments of the present disclosure, the first service mode may indicate that the remote terminal has been or is to be in a connected state.

In other words, the first service mode may indicate that the remote terminal needs to establish a communication connection.

In the embodiments of the present disclosure, the second service mode includes a service mode only used for forwarding a first downlink message.

In some embodiments of the present disclosure, the second service mode may indicate that the remote terminal has been or is to be in an inactive state or an idle state.

In some embodiments of the present disclosure, the first downlink message may include at least one of: a system message change message, an Earthquake and Tsunami Early Alert System (ETWS) message, a Commercial Mobile Alert Service (CMAS) message, or a paging message.

In some embodiments of the present disclosure, the second transceiving mode may include at least one of: information indicating that the remote terminal needs to receive second downlink message, identity information of the remote terminal, or information on a paging cycle of the remote terminal. For example, the second downlink message may include at least one of: a system message change message, an ETWS message, a CMAS message, or a paging message.

For example, the second service mode may include at least one of:
the relay terminal not needing to provide the remote terminal with a service of transmitting and receiving an uplink message;
the relay terminal needing to provide the remote terminal with a service of transmitting and receiving a downlink message, e.g., a system message change message, an ETWS message, a CMAS message, or a paging message, etc.;
indicating that the remote terminal needs to enter/be in an inactive/idle state; and
another parameter, e.g., information indicating a type of downlink message the remote terminal needs to receive, e.g., a system message change message, an ETWS message, a CMAS message, or a paging message, the identity information of the remote terminal, or the information on the paging cycle. Optionally, the identity information of the remote terminal may be International Mobile Subscriber Identification Number (IMSI) related information, for example, a value obtained by a modulo operation on the IMSI.

As shown in FIG. 2, the method 200 may further include the following.

At S220, the relay terminal determines whether a communication connection is successfully established or whether a downlink message can be successfully received.

For example, for the first service mode, if the relay terminal does not establish a communication connection with the network device, it is checked whether the attempt to establish the communication connection is successful. Optionally, the communication connection may include, but not limited to, a radio bearer core network bearer, and/or a PDU session/connection, or the like.

In another example, for the second service mode, the relay terminal checks whether the required downlink message can be successfully received, for example, whether a common search space is configured on an active BWP, or whether the relay terminal is restrained from receiving the downlink message due to sidelink and/or downlink interference on relevant time resources.

As shown in FIG. 2, the method 200 may further include the following.

At S230, the remote terminal receives a second message transmitted by the relay terminal in response to the first message.

In some embodiments of the present disclosure, the first message may indicate that the relay service mode required by the remote terminal is the first service mode, and the second message may indicate whether a communication connection is successfully established between the relay terminal and a network device. For example, the first message may indicate that the relay service mode required by the remote terminal is the first service mode, and the second message may be transmitted after a communication connection is successfully established between the relay terminal and a network device. Optionally, the communication connection may include at least one of: a radio bearer connection, a core network bearer connection, or a Protocol Data Unit (PDU) session connection.

In some embodiments of the present disclosure, the first message may indicate that the relay service mode required by the remote terminal is the second service mode, and the second message may indicate whether the relay terminal is capable of successfully receiving a downlink message. For example, the first message may indicate that the relay service mode required by the remote terminal is the second service mode, and the second message may be transmitted when the relay terminal is capable of successfully receiving a downlink message. Optionally, the relay terminal being capable of successfully receiving the downlink message may include at least one of: the relay terminal being configured with a common search space on an active Bandwidth Part (BWP), or the relay terminal not being restrained from receiving the downlink message due to sidelink and/or downlink interference.

In some embodiments of the present disclosure, the second message may indicate that the relay terminal is not capable of successfully receiving a downlink message.

In some embodiments of the present disclosure, the second message may further instruct the remote terminal to disconnect or update a connection.

For example, the second message may only indicate that the relay terminal is not capable of successfully receiving the downlink message. In another example, the second message may indicate that the relay terminal is not capable of successfully receiving the downlink message, and instruct the remote terminal to disconnect or update the connection.

In some embodiments of the present disclosure, the second message may be a first PC5-S message. For example, the first PC5-S message may be a connection establishment/modification success message; or the first PC5-S message may be a connection establishment/modification rejection message.

In some embodiments of the present disclosure, the second message may be a first PC5-Radio Resource Control (RRC) message. For example, the first PC5-RRC message may include at least one of: a response message for a message requesting a relay service, a response message for configuration signaling of a sidelink bearer for Uu data, or a response message for signaling for requesting a downlink message. For example, the sidelink bearer for Uu data may be Uu SRB 0/1/2. For example, the downlink message requested by the signaling for requesting the downlink message may include, but not limited to, a system message change message, an ETWS message, a CMAS message, or a paging message. For example, the downlink message requested by the signaling for requesting the downlink message may be a Paging Control Channel (PCCH) or a Broadcast Control Channel (BCCH).

As shown in FIG. 2, the method 200 may further include the following.

At S250, the remote terminal receives an update message transmitted by the relay terminal, and the update message indicates an updated state of the relay terminal.

In some embodiments of the present disclosure, the update message may include a cause for interruption of a communication connection between the relay terminal and a network device, or information on a cell to which the communication connection is restored. For example, the information on the cell may be information on a cell identity.

In some embodiments of the present disclosure, the cause for the interruption of the communication connection may include at least one of: a link failure, the relay terminal configured with no common search space in an active Bandwidth Part (BWP), or the relay terminal restrained from receiving a downlink message due to sidelink and/or downlink interference.

As shown in FIG. 2, the method 200 may further include the following.

At S240, the relay terminal determines whether the communication connection is successfully established or whether the downlink message can be successfully received.

For example, for the first service mode, a communication connection has been established between the relay terminal and the network device, but a link failure scenario may occur, such as T304, T312, T310, or T307, multiple access failures, or a maximum number of Radio Link Control (RLC) retransmissions may be reached, etc. Optionally, if an interruption of the communication connection between the relay terminal and the network device occurs, the relay terminal can transmit the update message to the remote terminal. Optionally, the communication connection may include, but not limited to, a radio bearer, a core network bearer, and/or a PDU session/connection. Optionally, the update message may include the cause for the interruption of the communication connection between the relay terminal and the network device, such as a scenario of link failure, such as T304, T312, T310, or T307, multiple access failures, or a maximum number of Radio Link Control (RLC) retransmissions may be reached, etc.

In another example, for the second service mode, the relay terminal may check whether the required downlink message can be successfully received, for example, whether a common search space is configured on an active BWP, or whether the relay terminal is restrained from receiving the downlink message due to sidelink and/or downlink interference on relevant time resources. Of course, if the interrupted communication connection between the relay terminal and the network device is restored, the relay terminal may also transmit the update message to the remote terminal to indicate the restoration of the communication connection and/or information on the cell for which the communication connection is restored.

In some embodiments of the present disclosure, the update message may be a second PC5-S message. For example, the second PC5-S message may be a connection interruption/modification message.

In some embodiments of the present disclosure, the update message may be a second PC5-RRC message. For example, the second PC5-RRC message may include at least one of: a response message for a message requesting a relay service, a response message for configuration signaling of a sidelink bearer for Uu data, or a response message for signaling for requesting a downlink message. For example, the sidelink bearer for Uu data may be Uu SRB 0/1/2. For example, the downlink message requested by the signaling for requesting the downlink message may include, but not limited to, a system message change message, an ETWS message, a CMAS message, or a paging message. For example, the downlink message requested by the signaling for requesting the downlink message may be a Paging Control Channel (PCCH) or a Broadcast Control Channel (BCCH).

In some embodiments of the present disclosure, the first message may be a third PC5-S message. For example, the third PC5-S message may be a connection establishment request/modification message.

In other words, the remote terminal can indicate the relay service required by the relay terminal via the connection establishment request/modification information, for example, whether to provide a communication connection or to receive a paging message.

In some embodiments of the present disclosure, the first message may be a third PC5-RRC message or a Uu-RRC message. Optionally, the third PC5-RRC message may include at least one of: a message for requesting a relay service, configuration signaling of a sidelink bearer for Uu data, or signaling for requesting a downlink message. Optionally, the first message may include at least one of: an RRC connection establishment/restoration/reestablishment message, a Protocol Data Unit (PDU) / Service Data Unit (SDU) on a sidelink bearer for Uu data, or a PDU/SDU on a sidelink bearer for a downlink message. For example, the sidelink bearer for Uu data may be Uu SRB 0/1/2. For example, the downlink message requested by the signaling for requesting the downlink message may include, but not limited to, a system message change message, an ETWS message, a CMAS message, or a paging message. For example, the downlink message requested by the signaling for requesting the downlink message may be a Paging Control Channel (PCCH) or a Broadcast Control Channel (BCCH).

To summarize, the relay terminal can decide whether to establish a radio bearer with a network device based on the relay service required by the remote terminal. For example, when a communication connection is required, if the relay terminal successfully establishes the connection with the network device, it will reply with a connection establishment/modification success message, otherwise it will reply with a connection establishment/modification rejection message. In another example, if the network connection of the relay terminal is interrupted during the communication process, the relay terminal may notify the remote terminal to disconnect or modify the connection. In the case where a paging message needs to be received, if the relay terminal can successfully receive the paging message, it will reply with a connection establishment/modification success message, otherwise it will reply with a connection establishment/modification rejection message. Optionally, if the paging message cannot be received successfully due to failure of the relay terminal during the communication process, the relay terminal can notify the remote terminal to disconnect or update the connection. In other words, the service mode of the relay terminal can be managed according to the service requirements of the remote terminal, and accordingly, the operation efficiency and processing capability of the relay terminal can be improved without wasting the resources of the relay terminal.

It should be noted that the PC5-S message as used in the present disclosure may be a sidelink message transmitted via the PC5 interface, and the PC5-RRC message may be an RRC message transmitted via the PC5 interface. In addition, the various types of interfaces as used in the present disclosure may be the interfaces specified in the 3GPP. For example, the PC5 interface can be used to transmit data between the terminals, and the Uu interface can be used to transmit data between the terminal and the access network device.

The preferred embodiments of the present disclosure have been described in detail above with reference to the accompanying drawings. However, the present disclosure is not limited to the specific details of the above embodiments. Various simple modifications can be made to the technical solutions of the present disclosure without departing from the scope of the technical concept of the present disclosure as defined by the claims. These simple modifications all belong to the protection scope of the present disclosure. For example, the specific technical features described in the above specific embodiments can be combined as appropriate provided that they do not conflict. In order to avoid unnecessary repetition, the description of various possible combinations will be omitted here. In another example, the embodiments of the present disclosure can also be combined as appropriate, as long as they do not violate the concept of the present disclosure, and they should also be regarded as the content disclosed in the present disclosure.

It should also be understood that, in the method embodiments of the present disclosure, the values of the sequence numbers of the above processes do not mean the order of execution, and the execution order of each process should be determined by its functions and internal logics, and the implementation of the present disclosure is not limited to any specific order. In addition, in the embodiments of the present disclosure, the terms "downlink" and "uplink" are used to indicate the transmission direction of signals or data. Here, "downlink" is used to indicate that the transmission direction of signals or data is a first direction from a station to a user equipment of a cell, and "uplink" is used to indicate that the transmission direction of signals or data is a second direction from a user equipment in a cell to a station. For example, a "downlink signal" indicates that the transmission direction of the signal is the first direction. In addition, in this embodiment of the present disclosure, the term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

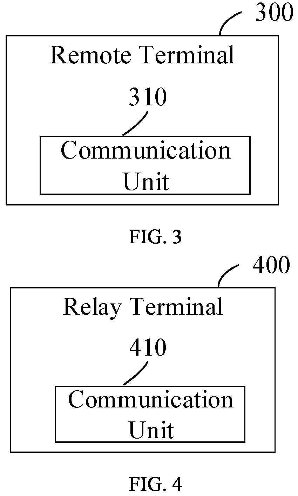

The method embodiments of the present disclosure have been described in detail above with reference to FIG. 2, and the apparatus embodiments of the present disclosure will be described in detail below with reference to FIGS. 3 to 6.

FIG. 3 is a schematic block diagram of a remote terminal 300 according to an embodiment of the present disclosure.

As shown in FIG. 3, the remote terminal 300 may include:
a communication unit 310 configured to transmit a first message indicating that a relay service mode required by the remote terminal is a first service mode and/or a second service mode.

In the claimed embodiments, the first service includes service mode requiring forwarding of uplink data.

In some embodiments of the present disclosure, the first service mode may indicate that the remote terminal has been or is to be in a connected state.

In the claimed embodiments, the second service mode includes a service mode only used for forwarding a first downlink message.

In some embodiments of the present disclosure, the second service mode may indicate that the remote terminal has been or is to be in an inactive state or an idle state.

In some embodiments of the present disclosure, the first downlink message may include at least one of: a system message change message, an Earthquake and Tsunami Early Alert System (ETWS) message, a Commercial Mobile Alert Service (CMAS) message, or a paging message.

In some embodiments of the present disclosure, the second transceiving mode may include at least one of: information indicating that the remote terminal needs to receive second downlink message, identity information of the remote terminal, or information on a paging cycle of the remote terminal.

In some embodiments of the present disclosure, the second downlink message may include at least one of: a system message change message, an Earthquake and Tsunami Early Alert System (ETWS) message, a Commercial Mobile Alert Service (CMAS) message, or a paging message.

In some embodiments of the present disclosure, the communication unit 310 may be further configured to:
receive a second message as a response to the first message.

In some embodiments of the present disclosure, the first message may indicate that the relay service mode required by the remote terminal is the first service mode, and the second message may indicate whether a communication connection is successfully established between the relay terminal and a network device.

In some embodiments of the present disclosure, the first message may indicate that the relay service mode required by the remote terminal is the first service mode, and the second message may be transmitted after a communication connection is successfully established between the relay terminal and a network device.

In some embodiments of the present disclosure, the communication connection may include at least one of: a radio bearer connection, a core network bearer connection, or a Protocol Data Unit (PDU) session connection.

In some embodiments of the present disclosure, the first message may indicate that the relay service mode required by the remote terminal is the second service mode, and the second message may indicate whether the relay terminal is capable of successfully receiving a downlink message.

In some embodiments of the present disclosure, the first message may indicate that the relay service mode required by the remote terminal is the second service mode, and the second message may be transmitted when the relay terminal is capable of successfully receiving a downlink message.

In some embodiments of the present disclosure, the relay terminal being capable of successfully receiving the downlink message may include at least one of: the relay terminal being configured with a common search space on an active Bandwidth Part (BWP), or the relay terminal not being restrained from receiving the downlink message due to sidelink and/or downlink interference.

In some embodiments of the present disclosure, the second message may indicate that the relay terminal is not capable of successfully receiving a downlink message.

In some embodiments of the present disclosure, the second message may further instruct the remote terminal to disconnect or update a connection.

In some embodiments of the present disclosure, the second message may be a first PC5-S message.

In some embodiments of the present disclosure, the first PC5-S message may be a connection establishment/modification success message; or the first PC5-S message may be a connection establishment/modification rejection message.

In some embodiments of the present disclosure, the second message may be a first PC5-Radio Resource Control (RRC) message.

In some embodiments of the present disclosure, the first PC5-RRC message may include at least one of: a response message for a message requesting a relay service, a response message for configuration signaling of a sidelink bearer for Uu data, or a response message for signaling for requesting a downlink message.

In some embodiments of the present disclosure, the communication unit 310 may be further configured to:
receive an update message indicating an updated state of the relay terminal.

In some embodiments of the present disclosure, the update message may include a cause for interruption of a communication connection between the relay terminal and a network device, or information on a cell to which the communication connection is restored.

In some embodiments of the present disclosure, the cause for the interruption of the communication connection may include at least one of: a link failure, the relay terminal configured with no common search space in an active Bandwidth Part (BWP), or the relay terminal restrained from receiving a downlink message due to sidelink and/or downlink interference.

In some embodiments of the present disclosure, the update message may be a second PC5-S message.

In some embodiments of the present disclosure, the second PC5-S message may be a connection interruption/modification message.

In some embodiments of the present disclosure, the update message may be a second PC5-Radio Resource Control (RRC) message.

In some embodiments of the present disclosure, the second PC5-RRC message may include at least one of: a response message for a message requesting a relay service, a response message for configuration signaling of a sidelink bearer for Uu data, or a response message for signaling for requesting a downlink message.

In some embodiments of the present disclosure, the first message may be a third PC5-S message.

In some embodiments of the present disclosure, the third PC5-S message may be a connection establishment request/modification message.

In some embodiments of the present disclosure, the first message may be a third PC5-RRC message or a Uu-RRC message.

In some embodiments of the present disclosure, the third PC5-RRC message may include at least one of: a message for requesting a relay service, configuration signaling of a sidelink bearer for Uu data, or signaling for requesting a downlink message.

In some embodiments of the present disclosure, the first message may include at least one of: an RRC connection establishment/restoration/reestablishment message, a Protocol Data Unit (PDU) / Service Data Unit (SDU) on a sidelink bearer for Uu data, or a PDU/SDU on a sidelink bearer for a downlink message.

It should be understood that the apparatus embodiments and the method embodiments may correspond to each other, and for similar descriptions, reference can be made to the method embodiments. In particular, the remote terminal 300 as shown in FIG. 3 may corresponding to the corresponding entity for performing the method 200 according to the embodiment of the present disclosure, and the above and other operations and/or functions of the respective units in the remote terminal 300 are provided for implementing the corresponding processes in the respective methods in FIG. 2. For brevity, details thereof will be omitted here.

FIG. 4 is a schematic block diagram of a relay terminal 400 according to an embodiment of the present disclosure.

As shown in FIG. 4, the relay terminal 400 may include:
a communication unit 410 configured to receive a first message indicating that a relay service mode required by a remote terminal is a first service mode and/or a second service mode.

In some embodiments of the present disclosure, the first service mode may include a service mode for communication connection and/or a service mode requiring forwarding of uplink data.

In some embodiments of the present disclosure, the first service mode may indicate that the remote terminal has been or is to be in a connected state.

In some embodiments of the present disclosure, the second service mode may include a service mode not used for communication connection and/or a service mode only used for forwarding a first downlink message.

In some embodiments of the present disclosure, the second service mode may indicate that the remote terminal has been or is to be in an inactive state or an idle state.

In some embodiments of the present disclosure, the first downlink message may include at least one of: a system message change message, an Earthquake and Tsunami Early Alert System (ETWS) message, a Commercial Mobile Alert Service (CMAS) message, or a paging message.

In some embodiments of the present disclosure, the second transceiving mode may include at least one of: information indicating that the remote terminal needs to receive second downlink message, identity information of the remote terminal, or information on a paging cycle of the remote terminal.

In some embodiments of the present disclosure, the second downlink message may include at least one of: a system message change message, an Earthquake and Tsunami Early Alert System (ETWS) message, a Commercial Mobile Alert Service (CMAS) message, or a paging message.

In some embodiments of the present disclosure, the communication unit 410 may be further configured to:
transmit a second message in response to the first message.

In some embodiments of the present disclosure, the first message may indicate that the relay service mode required by the remote terminal is the first service mode, and the second message may indicate whether a communication connection is successfully established between the relay terminal and a network device.

In some embodiments of the present disclosure, the first message may indicate that the relay service mode required by the remote terminal is the first service mode, and the second message may be transmitted after a communication connection is successfully established between the relay terminal and a network device.

In some embodiments of the present disclosure, the communication connection may include at least one of: a radio bearer connection, a core network bearer connection, or a Protocol Data Unit (PDU) session connection.

In some embodiments of the present disclosure, the first message may indicate that the relay service mode required by the remote terminal is the second service mode, and the second message may indicate whether the relay terminal is capable of successfully receiving a downlink message.

In some embodiments of the present disclosure, the first message may indicate that the relay service mode required by the remote terminal is the second service mode, and the second message may be transmitted when the relay terminal is capable of successfully receiving a downlink message.

In some embodiments of the present disclosure, the relay terminal being capable of successfully receiving the downlink message may include at least one of: the relay terminal being configured with a common search space on an active Bandwidth Part (BWP), or the relay terminal not being restrained from receiving the downlink message due to sidelink and/or downlink interference.

In some embodiments of the present disclosure, the second message may indicate that the relay terminal is not capable of successfully receiving a downlink message.

In some embodiments of the present disclosure, the second message may further instruct the remote terminal to disconnect or update a connection.

In some embodiments of the present disclosure, the second message may be a first PC5-S message.

In some embodiments of the present disclosure, the first PC5-S message may be a connection establishment/modification success message; or, the first PC5-S message may be a connection establishment/modification rejection message.

In some embodiments of the present disclosure, the second message may be a first PC5-Radio Resource Control (RRC) message.

In some embodiments of the present disclosure, the first PC5-RRC message may include at least one of: a response message for a message requesting a relay service, a response message for configuration signaling of a sidelink bearer for Uu data, or a response message for signaling for requesting a downlink message.

In some embodiments of the present disclosure, the communication unit 410 may be further configured to:
transmit an update message indicating an updated state of the relay terminal.

In some embodiments of the present disclosure, the update message may include a cause for interruption of a communication connection between the relay terminal and a network device, or information on a cell to which the communication connection is restored.

In some embodiments of the present disclosure, the cause for the interruption of the communication connection may include at least one of: a link failure, the relay terminal configured with no common search space in an active Bandwidth Part (BWP), or the relay terminal restrained from receiving a downlink message due to sidelink and/or downlink interference.

In some embodiments of the present disclosure, the update message may be a second PC5-S message.

In some embodiments of the present disclosure, the second PC5-S message may be a connection interruption/modification message.

In some embodiments of the present disclosure, the update message may be a second PC5-Radio Resource Control (RRC) message.

In some embodiments of the present disclosure, the second PC5-RRC message may include at least one of: a response message for a message requesting a relay service, a response message for configuration signaling of a sidelink bearer for Uu data, or a response message for signaling for requesting a downlink message.

In some embodiments of the present disclosure, the first message may be a third PC5-S message.

In some embodiments of the present disclosure, the third PC5-S message may be a connection establishment request/modification message.

In some embodiments of the present disclosure, the first message may be a third PC5-RRC message or a Uu-RRC message.

In some embodiments of the present disclosure, the third PC5-RRC message may include at least one of: a message for requesting a relay service, configuration signaling of a sidelink bearer for Uu data, or signaling for requesting a downlink message.

In some embodiments of the present disclosure, the first message may include at least one of: an RRC connection establishment/restoration/reestablishment message, a Protocol Data Unit (PDU) / Service Data Unit (SDU) on a sidelink bearer for Uu data, or a PDU/SDU on a sidelink bearer for a downlink message.

It should be understood that the apparatus embodiments and the method embodiments may correspond to each other, and for similar descriptions, reference can be made to the method embodiments. In particular, the relay terminal 400 as shown in FIG. 4 may corresponding to the corresponding entity for performing the method 200 according to the embodiment of the present disclosure, and the above and other operations and/or functions of the respective units in the relay terminal 400 are provided for implementing the corresponding processes in the respective methods in FIG. 2. For brevity, details thereof will be omitted here.

The communication device according to the embodiment of the present disclosure has been described above from the perspective of functional modules with reference to the accompanying drawings. It should be understood that the functional modules can be implemented in the form of hardware, software instructions, or a combination of hardware and software modules.

Specifically, the steps of the method embodiments in the embodiments of the present disclosure may be implemented by hardware integrated logic circuits in the processor and/or software instructions, and the steps of the methods disclosed in conjunction with the embodiments of the present disclosure may be directly embodied as implemented by a hardware decoding processor or a combination of hardware and software modules in a decoding processor.

Optionally, the software modules may be located in a random access memory, a flash memory, a read-only memory, a programmable read-only memory, an electrically erasable programmable memory, a register, and other storage media known in the art. The storage medium is located in the memory, and the processor reads the information in the memory, and performs the steps in the above method embodiments in combination with its hardware.

For example, the processing unit and the communication unit above may be implemented by a processor and a transceiver, respectively.

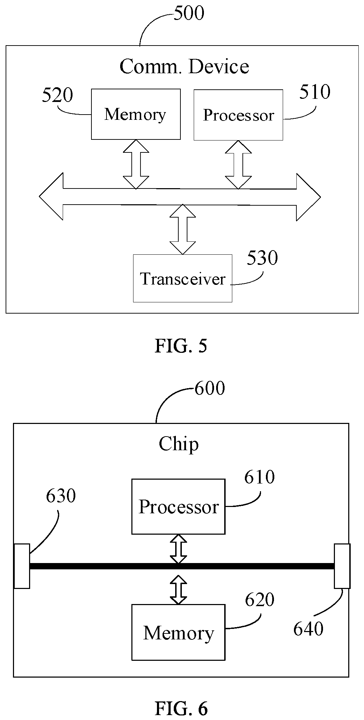

FIG. 5 is a schematic diagram showing a structure of a communication device 500 according to an embodiment of the present disclosure.

As shown in FIG. 5, the communication device 500 includes a processor 510.

Here, the processor 510 can invoke and execute a computer program from a memory to implement the method according to the embodiment of the present disclosure.

Referring to FIG. 5 again, the communication device 500 may further include a memory 520.

Here, the memory 520 may be configured to store indication information, and may further be configured to store codes, instructions, etc. to be executed by the processor 510. The processor 510 can invoke and execute a computer program from the memory 520 to implement the method according to the embodiment of the present disclosure. The memory 520 may be a separate device independent from the processor 510, or may be integrated in the processor 810.

Referring to FIG. 5 again, the communication device 500 may further include a transceiver 530.

Here, the processor 510 may control the transceiver 530 to communicate with other devices, and in particular, transmit information or data to other devices, or receive information or data transmitted by other devices.

The transceiver 530 may include a transmitter and a receiver. The transceiver 530 may further include one or more antennas.

It can be appreciated that the components in the communication device 500 may be connected via a bus system. Here, the bus system may include a power bus, a control bus and a status signal bus, in addition to a data bus.

It can be appreciated that the communication device 500 may be the terminal device according to the embodiment of the present disclosure, and the communication device 500 may implement the corresponding processes implemented by the remote terminal in any of the methods according to the embodiments of the present disclosure. That is, the communication device 500 in the embodiment of the present disclosure may correspond to the remote terminal in the embodiment of the present disclosure, and may correspond to the corresponding entity that performs the method 200 according to the embodiment of the present disclosure. For the sake of brevity, details thereof will be omitted here. Similarly, the communication device 500 may be the network device according to the embodiment of the present disclosure, and the communication device 500 may implement the corresponding processes implemented by the relay terminal in any of the methods according to the embodiments of the present disclosure. That is, the communication device 500 in the embodiment of the present disclosure may correspond to the relay terminal in the embodiment of the present disclosure, and may correspond to the corresponding entity that performs the method 200 according to the embodiment of the present disclosure. For the sake of brevity, details thereof will be omitted here.

In addition, an embodiment of the present disclosure also provides a chip.

For example, the chip may be an integrated circuit chip, which has a signal processing capability, and can implement or perform any of the methods, steps, and logic block diagrams disclosed in the embodiments of the present disclosure. The chip may also be referred to as a system level chip, a system chip, a chip system, a system-on-a-chip, or the like. Optionally, the chip can be applied in various communication devices, such that the communication device installed with the chip can perform the methods, steps and logic block diagrams disclosed in the embodiments of the present disclosure.

FIG. 6 is a schematic diagram showing a structure of a chip 600 according to an embodiment of the present disclosure.

As shown in FIG. 6, the chip 600 includes a processor 610.

Here, the processor 610 can invoke and execute a computer program from a memory to implement the method according to the embodiment of the present disclosure.

Referring to FIG. 6 again, the chip 600 may further include a memory 620.

Here, the processor 610 can invoke and execute a computer program from the memory 620 to implement the method according to the embodiment of the present disclosure. The memory 620 may be configured to store indication information, and may further be configured to store codes, instructions, etc. to be executed by the processor 610. The memory 620 may be a separate device independent from the processor 610, or may be integrated in the processor 910.

Referring to FIG. 6 again, the chip 600 may further include an input interface 630.

Here, the processor 610 can control the input interface 630 to communicate with other devices or chips, and in particular, obtain information or data transmitted by other devices or chips.

Referring to FIG. 6 again, the chip 600 may further include an output interface 640.

Here, the processor 610 can control the output interface 640 to communicate with other devices or chips, and in particular, output information or data to other devices or chips.

It can be appreciated that the chip 600 may be applied in the remote terminal according to the embodiment of the present disclosure, and the chip 600 may implement the corresponding processes implemented by the relay terminal in any of the methods according to the embodiments of the present disclosure, or the corresponding processes implemented by the relay terminal in any of the methods according to the embodiments of the present disclosure. For the sake of brevity, details thereof will be omitted here.

It can be appreciated that the components in the chip 600 may be connected via a bus system. Here, the bus system may include a power bus, a control bus and a status signal bus, in addition to a data bus.

The above processor may include, but not limited to, a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed by the processor. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, erasable programmable memory, or register. The storage medium can be located in the memory, and the processor can read information from the memory and perform the steps of the above methods in combination with its hardware.

The above memory may include, but not limited to, a volatile memory and/or a non-volatile memory. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM)), and Direct Rambus RAM (DR RAM).

It is to be noted that the memory used for the system and method described in the present disclosure is intended to include these and any other suitable types of memories.

An embodiment of the present disclosure also provides a computer readable storage medium for storing a computer program. The computer readable storage medium stores one or more programs including instructions which, when executed by a portable electronic device including a plurality of application programs, enable the portable electronic device to perform the method 200 according to any of the method embodiments.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including a computer program.

Optionally, the computer program product can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program which, when executed by a computer, causes the computer to perform the method 200 according to any of the method embodiments.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

In addition, an embodiment of the present disclosure further provides a communication system, which may include the above terminal device and network device to form the communication system 100 as shown in FIG. 1. Details thereof will be omitted here for simplicity. It should be noted that the term "system" and the like as used herein may also be referred to as "network management architecture" or "network system" or the like.

It should also be understood that the terms used in the embodiments of the present disclosure and the claims as attached are only for the purpose of describing specific embodiments, and are not intended to limit the embodiments of the present disclosure.

For example, as used in the embodiments of the present disclosure and the claims as attached, the singular forms "a," "the," "above," and "said" are intended to include the plural forms as well, unless the context clearly indicates otherwise.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of the embodiments of the present disclosure.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways.

For example, the divisions of the units or modules or components in the apparatus embodiments as described above are only divisions based on logical functions, and there may be other divisions in actual implementations. For example, more than one unit or module or component may be combined or integrated into another system, or some units or modules or components can be ignored or omitted.

In another example, the units/modules/components described above as separate/explicit components may or may not be physically separated, that is, they may be co-located or distributed across a number of network elements. Some or all of the units/modules/components may be selected according to actual needs to achieve the objects of the embodiments of the present disclosure.

Finally, it is to be noted that the mutual coupling or direct coupling or communicative connection as shown or discussed above may be indirect coupling or communicative connection between devices or units via some interfaces which may be electrical, mechanical, or in any other forms.

While the specific embodiments of the present disclosure have been described above, the scope of the embodiments of the present disclosure is not limited to these embodiments. Various variants and alternatives can be made by those skilled in the art without departing from the scope of the embodiments of the present disclosure. These variants and alternatives are to be encompassed by the scope of the embodiments of present disclosure as defined by the claims as attached.

## Claims

1. A wireless communication method performed by a remote terminal, comprising:
transmitting (S210), by the remote terminal to a relay terminal, a first message indicating that a relay service mode required by the remote terminal is a first service mode and/or a second service mode; and
receiving (S230), by the remote terminal from the relay terminal, a second message as a response to the first message,
wherein
the first service mode comprises a service mode requiring forwarding of uplink data,
the second service mode comprises a service mode only used for forwarding a first downlink message,
the first downlink message comprises a paging message,
wherein the second message is a first PC5-Radio Resource Control, RRC message,
the first PC5-RRC message comprises a response message for responding to signaling for requesting a downlink message.

2. The method according to claim 1, wherein the second service mode comprises at least one of: identity information of the remote terminal, or information on a paging cycle of the remote terminal.

3. The method according to any one of claims 1 to 2, further comprising:
receiving (S250), by the remote terminal, an update message indicating an updated state of the relay terminal.

4. The method according to claim 3, wherein the update message includes a cause for interruption of a communication connection between the relay terminal and a network device,
the cause for the interruption of the communication connection comprises a link failure.

5. The method according to claim 3 or 4, wherein the update message is a second PC5-Radio Resource Control, RRC, message.

6. The method according to any one of claims 1 to 5, wherein the first message is a third PC5-RRC message,
the third PC5-RRC message comprises signaling for requesting a downlink message.

7. The method according to any one of claims 1 to 4, wherein the first message comprises a Protocol Data Unit, PDU, /Service Data Unit, SDU, on a sidelink bearer for Uu data, the sidelink bearer for Uu data being Uu SRB 0/1/2.

8. A wireless communication method performed by a relay terminal, comprising:
receiving, by the relay terminal from a remote terminal, a first message indicating that a relay service mode required by the remote terminal is a first service mode and/or a second service mode;
determining, by the relay terminal based on the first message, whether a communication connection is successfully established or whether a downlink message is successfully received; and
transmitting, by the relay terminal to the remote terminal, a second message as a response to the first message,
wherein
the first service mode comprises a service mode requiring forwarding of uplink data,
the second service mode comprises a service mode only used for forwarding a first downlink message,
the first downlink message comprises a paging message,
wherein the second message is a first PC5-Radio Resource Control, RRC, message,
the first PC5-RRC message comprises a response message for responding to signaling for requesting a downlink message.

9. A remote terminal, comprising a processor (510), a memory (520), and a transceiver (530), wherein the memory (520) is configured to store a computer program, and the processor (510) is configured to invoke and execute the computer program stored in the memory (520) to perform the method according to any one of claims 1 to 7.

10. A relay terminal, comprising a processor (510), a memory (520), and a transceiver (530), wherein the memory (520) is configured to store a computer program, and the processor (510) is configured to invoke and execute the computer program stored in the memory (520) to perform the method according to claim 8.

## Patentansprüche

1. Drahtloskommunikationsverfahren, das von einem entfernten Endgerät durchgeführt wird, umfassend:
Senden (S210), durch das entfernte Endgerät an ein Relais-Endgerät, einer ersten Nachricht, die anzeigt, dass ein vom entfernten Endgerät angeforderter Relais-Dienstmodus ein erster Dienstmodus und/oder ein zweiter Dienstmodus ist; und
Empfangen (S230), durch das entfernte Endgerät vom Relais-Endgerät, einer zweiten Nachricht als Antwort auf die erste Nachricht,
wobei
der erste Dienstmodus einen Dienstmodus umfasst, der das Weiterleiten von Uplink-Daten erfordert,
der zweite Dienstmodus einen Dienstmodus umfasst, der nur zum Weiterleiten einer ersten Downlink-Nachricht verwendet wird,
die erste Downlink-Nachricht eine Paging-Nachricht umfasst,
wobei die zweite Nachricht eine erste PC5-"Radio Resource Control"-, -RRC-, Nachricht ist,
die erste PC5-RRC-Nachricht eine Antwortnachricht zur Beantwortung einer Signalisierung zur Anforderung einer Downlink-Nachricht umfasst.

2. Verfahren nach Anspruch 1, wobei der zweite Dienstmodus mindestens eines von Identitätsinformationen des entfernten Endgeräts oder Informationen über einen Paging-Zyklus des entfernten Endgeräts umfasst.

3. Verfahren nach einem der Ansprüche 1 bis 2, ferner umfassend:
Empfangen (S250), durch das entfernte Endgerät, einer Aktualisierungsnachricht, die einen aktualisierten Zustand des Relais-Endgeräts anzeigt.

4. Verfahren nach Anspruch 3, wobei die Aktualisierungsnachricht eine Ursache für die Unterbrechung einer Kommunikationsverbindung zwischen dem Relais-Endgerät und einer Netzvorrichtung beinhaltet,
die Ursache für die Unterbrechung der Kommunikationsverbindung einen Verbindungsausfall umfasst.

5. Verfahren nach Anspruch 3 oder 4, wobei die Aktualisierungsnachricht eine zweite PC5-"Radio Resource Control"-, -RRC-, Nachricht ist.

6. Verfahren nach einem der Ansprüche 1 bis 5, wobei die erste Nachricht eine dritte PC5-RRC-Nachricht ist, die dritte PC5-RRC-Nachricht eine Signalisierung zur Anforderung einer Downlink-Nachricht umfasst.

7. Verfahren nach einem der Ansprüche 1 bis 4, wobei die erste Nachricht eine "Protocol Data Unit", PDU, / "Service Data Unit", SDU, auf einem Sidelink-Träger für Uu-Daten umfasst, wobei der Sidelink-Träger für Uu-Daten Uu SRB 0/1/2 ist.

8. Drahtloskommunikationsverfahren, das von einem Relais-Endgerät durchgeführt wird, umfassend: Empfangen, durch das Relais-Endgerät von einem entfernten Endgerät, einer ersten Nachricht, die anzeigt, dass ein vom entfernten Endgerät angeforderter Relais-Dienstmodus ein erster Dienstmodus und/oder ein zweiter Dienstmodus ist; Bestimmen, durch das Relais-Endgerät auf der Grundlage der ersten Nachricht, ob eine Kommunikationsverbindung erfolgreich aufgebaut wurde oder ob eine Downlink-Nachricht erfolgreich empfangen wurde; und
Senden, durch das Relais-Endgerät an das entfernte Endgerät, einer zweiten Nachricht als Antwort auf die erste Nachricht,
wobei
der erste Dienstmodus einen Dienstmodus umfasst, der das Weiterleiten von Uplink-Daten erfordert,
der zweite Dienstmodus einen Dienstmodus umfasst, der nur zum Weiterleiten einer ersten Downlink-Nachricht verwendet wird,
die erste Downlink-Nachricht eine Paging-Nachricht umfasst,
wobei die zweite Nachricht eine erste PC5-"Radio Resource Control"-, -RRC-, Nachricht ist,
die erste PC5-RRC-Nachricht eine Antwortnachricht zur Beantwortung einer Signalisierung zur Anforderung einer Downlink-Nachricht umfasst.

9. Entferntes Endgerät, umfassend einen Prozessor (510), einen Speicher (520) und einen Sender-Empfänger (530), wobei der Speicher (520) dafür ausgelegt ist, ein Computerprogramm zu speichern, und der Prozessor (510) dafür ausgelegt ist, zum Durchführen des Verfahrens nach einem der Ansprüche 1 bis 7 das im Speicher (520) gespeicherte Computerprogramm aufzurufen und auszuführen.

10. Relais-Endgerät, umfassend einen Prozessor (510), einen Speicher (520) und einen Sender-Empfänger (530), wobei der Speicher (520) dafür ausgelegt ist, ein Computerprogramm zu speichern, und der Prozessor (510) dafür ausgelegt ist, zum Durchführen des Verfahrens nach Anspruch 8 das im Speicher (520) gespeicherte Computerprogramm aufzurufen und auszuführen.

## Revendications

1. Procédé de communication sans fil réalisé par un terminal distant, le procédé comprenant les étapes consistant à :
émettre (S210), par le terminal distant à un terminal relais, un premier message indiquant qu'un mode de service relais requis par le terminal distant est un premier mode de service et/ou un second mode de service ; et
recevoir (S230), par le terminal distant en provenance du terminal relais, un second message en réponse au premier message,
dans lequel :
le premier mode de service comprend un mode de service nécessitant un transfert de données en liaison montante,
le second mode de service comprend un mode de service utilisé uniquement pour transférer un premier message en liaison descendante,
le premier message en liaison descendante comprend un message de radiomessagerie,
le second message est un premier message PC5 de contrôle des ressources radio (RRC), le premier message PC5-RRC comprenant un message de réponse pour répondre à une signalisation de demande d'un message en liaison descendante.

2. Procédé selon la revendication 1, dans lequel le second mode de service comprend au moins un des éléments suivants : des informations d'identité du terminal distant ou des informations sur un cycle de radiomessagerie du terminal distant.

3. Procédé selon l'une quelconque des revendications 1 et 2, comprenant en outre l'étape consistant à :
recevoir (S250), par le terminal distant, un message de mise à jour indiquant un état mis à jour du terminal relais.

4. Procédé selon la revendication 3, dans lequel le message de mise à jour comprend une cause d'interruption d'une connexion de communication entre le terminal relais et un dispositif de réseau,
la cause de l'interruption de la connexion de communication comprenant une panne de liaison.

5. Procédé selon la revendication 3 ou 4, dans lequel le message de mise à jour est un deuxième message PC5 de contrôle des ressources radio (RRC).

6. Procédé selon l'une quelconque des revendications 1 à 5, dans lequel le premier message est un troisième message PC5-RRC,
le troisième message PC5-RRC comprenant une signalisation de demande d'un message en liaison descendante.

7. Procédé selon l'une quelconque des revendications 1 à 4, dans lequel le premier message comprend une unité de données de protocole (PDU)/unité de données de service (SDU) sur une porteuse en liaison latérale pour des données Uu, la porteuse en liaison latérale pour les données Uu étant une SRB Uu 0/1/2.

8. Procédé de communication sans fil réalisé par un terminal relais, le procédé comprenant les étapes consistant à :
recevoir, par le terminal relais en provenance d'un terminal distant, un premier message indiquant qu'un mode de service relais requis par le terminal distant est un premier mode de service et/ou un second mode de service ;
déterminer, par le terminal relais, sur la base du premier message, si une connexion de communication est établie avec succès ou si un message en liaison descendante est reçu avec succès ; et
émettre, par le terminal relais vers le terminal distant, un second message en réponse au premier message,
dans lequel :
le premier mode de service comprend un mode de service nécessitant un transfert de données en liaison montante,
le second mode de service comprend un mode de service utilisé uniquement pour transférer un premier message en liaison descendante,
le premier message en liaison descendante comprend un message de radiomessagerie,
le second message est un premier message PC5 de contrôle des ressources radio (RRC), le premier message PC5-RRC comprenant un message de réponse pour répondre à une signalisation de demande d'un message en liaison descendante.

9. Terminal distant, comprenant un processeur (510), une mémoire (520) et un émetteur-récepteur (530), la mémoire (520) étant configurée pour stocker un programme informatique et le processeur (510) étant configuré pour appeler et exécuter le programme informatique stocké dans la mémoire (520) afin de réaliser le procédé selon l'une quelconque des revendications 1 à 7.

10. Terminal relais, comprenant un processeur (510), une mémoire (520) et un émetteur-récepteur (530), la mémoire (520) étant configurée pour stocker un programme informatique et le processeur (510) étant configuré pour appeler et exécuter le programme informatique stocké dans la mémoire (520) afin de réaliser le procédé selon la revendication 8.
